# FASCICULE DE BREVET EUROPEEN

(11) **EP 0 742 905 B1**
(45) Date de publication et mention de la délivrance du brevet: **13.06.2001**
(21) Numéro de dépôt: 95907627.4
(22) Date de dépôt: 30.01.1995
(51) Int. Cl.: G01P 15/09, G01L 23/22

(54) **CAPTEUR ACCELEROMETRIQUE POUR MESURE DU CLIQUETIS D'UN MOTEUR A COMBUSTION INTERNE**
BESCHLEUNIGUNGSMESSAUFNEHMER FUR KLOPFMESSUNGEN IN EINEM VERBRENNUNGSMOTOR
ACCELEROMETRIC SENSOR FOR MEASURING PINKING IN AN INTERNAL COMBUSTION ENGINE

(30) Priorité: 01.02.1994 FR 9401189
(43) Date de publication de la demande: 20.11.1996
(73) Titulaire: SIEMENS AUTOMOTIVE S.A., 31036 Toulouse Cédex (FR)
(72) Inventeur: GENOT, Bernard, Pierre, André, F-31120 Roquettes (FR)
(74) Mandataire: Zedlitz, Peter, Dipl.-Inf.
(86) Numéro de dépôt international: EP9500314
(87) Numéro de publication internationale: WO9521384

(56) Documents cités:
- EP-A- 0 184 666
- DE-A- 4 113 545
- FR-A- 2 627 804

## Description

La présente invention est relative à une amélioration apportée aux capteurs accélérométriques, et plus particulièrement aux capteurs de type piézo-électrique destinés à la détection et à la mesure du cliquetis des moteurs à combustion interne.

On utilise couramment, pour la mesure du cliquetis des moteurs à combustion inteme, des capteurs accélérométriques du type non résonnant, permettant de mesurer l'intensité des vibrations occasionnées par ce phénomène sur la culasse des moteurs. L'intérêt de ce type de capteurs réside dans leur courbe de réponse, présentant une zone dans laquelle leur sensibilité est sensiblement constante en fonction de la fréquence. Cette plage utile est limitée vers les fréquences supérieures à cause des non linéarités générées par la fréquence de résonance du capteur sur son montage. Or, la commande électronique des moteurs requiert la mesure des vibrations révélatrices de cliquetis sur une gamme de fréquences de plus en plus étendue.

On connaît, par exemple du brevet EP 0 184 666, un capteur accélérométrique constitué, comme le montre la figure 1A, représentative de l'état de la technique, d'une embase 10 en forme de manchon 11 terminé par une collerette 12 sur laquelle sont empilés une rondelle piézo-électrique 2 placée entre deux disques de connexion 3 et une masse sismique 4, cet empilage étant précontraint par une rondelle élastique 5 et un écrou 6 vissé sur le manchon. De tels capteurs, habituellement utilisés en électronique automobile, présentent une fréquence de résonance typique de l'ordre de 12 à 15 Khz, limitant la mesure du cliquetis à des plages de fréquences inférieures à 10 Khz. Différentes solutions ont été proposées pour repousser la fréquence de résonance de ce type de capteur vers des fréquences plus élevées. On peut citer à titre d'exemple l'emploi d'une précontrainte plus élevée sur l'empilage, qui présente l'inconvénient d'occasionner un vieillissement accéléré du cristal piézo-électrique réduisant la fiabilité du capteur, ou l'emploi de matériaux plus rigides pour l'embase, tels que le béryllium, ce qui augmente le coût du capteur, ou encore l'application d'une couche de graisse, de colle ou de polymère entre le capteur et la surface sur laquelle il est monté, ce qui introduit une opération supplémentaire difficile à maîtriser.

La présente invention a donc pour but de proposer une solution simple, économique et facile à mettre en oeuvre industriellement.

On atteint ce but de l'invention au moyen d'un capteur accélérométrique, du type constitué d'une embase présentant la forme d'un manchon prolongé par une collerette dont la face supérieure définit un épaulement sur lequel sont empilées au moins une rondelle piézo-électrique, des disques de connexion et une masse sismique, et dont la face inférieure est en contact avec une pièce à mesurer. Selon l'invention, la face inférieure de la collerette présente un creux central tel que le diamètre moyen de répartition de la charge sur la surface de contact soit égal ou supérieur au diamètre moyen de l'épaulement.

Selon un premier mode de réalisation de la présente invention, la surface de contact entre la face inférieure de la collerette et la pièce présente une forme annulaire dont le diamètre intérieur est supérieur au diamètre externe du manchon, et le diamètre moyen est au moins égal au diamètre moyen de l'épaulement.

Suivant une caractéristique de ce mode de réalisation, la face inférieure de la collerette comporte un évidement coaxial au manchon et de diamètre supérieur au diamètre externe de celui-ci.

Selon un deuxième mode de réalisation de la présente invention, la face inférieure de la collerette présente une concavité coaxiale au manchon s'étendant sur au moins une partie de sa surface

Le capteur selon l'invention est destiné à être fixé sur une pièce par l'intermédiaire d'une vis passant par l'alésage du manchon. Suivant une caractéristique remarquable de l'invention, la superficie de la surface de contact est déterminée de manière à éviter une déformation plastique permanente des surfaces en regard sous la pression exercée par la vis.

D'autres caractéristiques et avantages du capteur suivant l'invention apparaîtront à la lecture de la description qui va suivre et à l'examen des dessins annexés dans lesquels:
- la figure 1A représente une vue en coupe d'un capteur de la technique antérieure,
- la figure 1B représente une vue de dessous de l'embase d'un capteur de la technique antérieure,
- la figure 2A représente une vue en coupe d'un premier mode de réalisation du capteur selon l'invention,
- la figure 2B représente une vue de dessous de l'embase d'un capteur selon l'invention,
- la figure 3 représente les courbes de réponse comparées d'un capteur de la technique antérieure et d'un capteur selon l'invention.
- la figure 4 représente une vue en coupe d'un deuxième mode de réalisation du capteur selon l'invention,

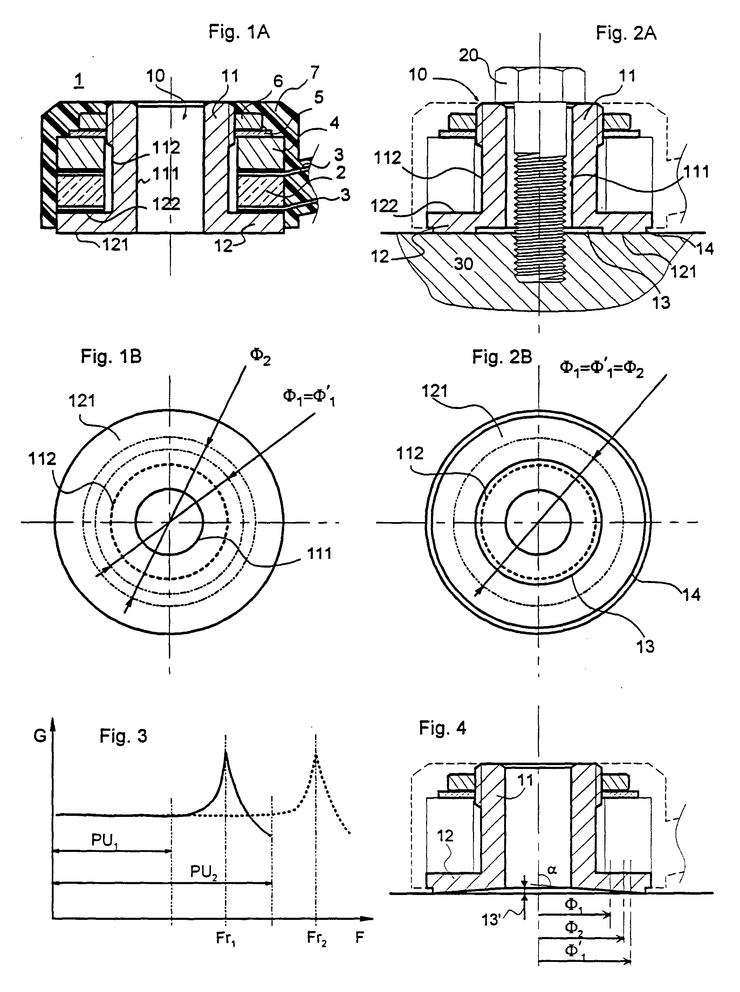

On se réfère à la figure 1A, partiellement décrite dans le préambule, où on a représenté une vue en coupe d'un capteur accélérométrique 1, du type employé par exemple pour mesurer les vibrations engendrées dans la culasse d'un moteur à combustion interne, vibrations dont l'intensité est révélatrice de la présence de cliquetis. Ce capteur se compose d'une rondelle piézo-électrique 2 placée entre deux disques métalliques 3 destinés à assurer la connexion électrique des faces de la rondelle à un connecteur (non représenté). Une masse sismique 4 de forme sensiblement identique à la rondelle 2 est pressée contre l'empilage précédent par une rondelle élastique 5 et un écrou 6. Ces éléments sont montés sur une embase 10 se présentant sous la forme d'un manchon 11 terminé par une collerette 12, coaxialement au manchon. La face supérieure de la collerette 12 forme un épaulement 122, défini par la paroi extérieure 112 du manchon 11 et le bord de la collerette, sur lequel repose l'empilage. L'extrémité du manchon 11 opposée à la collerette présente un filetage sur lequel est vissé l'écrou 6 permettant ainsi d'appliquer une contrainte initiale à l'empilage. Un surmoulage 7 en matière plastique enrobe le capteur, à l'exception d'un alésage 111 ménagé dans le manchon 11, destiné à recevoir une vis de fixation 20 (figure 2A) et de la face inférieure de la collerette qui sert de surface de contact 121 avec une pièce 30 (figure 2A), par exemple la culasse du moteur dont on veut détecter le cliquetis.

On a représenté sur la figure 1B une vue de dessous de l'embase 10. On peut constater sur cette vue que la surface de contact 121 s'étend de l'alésage 111 jusqu'au bord de la collerette, tandis que l'épaulement 122 va de la paroi extérieure 112 du manchon jusqu'au même bord de la collerette. On a matérialisé le diamètre moyen géométrique de la surface de contact 121 par le repère Φ₁ et celui de l'épaulement 122 par le repère Φ₂. On peut alors constater que le diamètre Φ₁ est notablement inférieur à Φ₂. Comme les surfaces en contact de la collerette et de la pièce 30 sont sensiblement parallèles avant serrage, la pression de contact générée par le serrage de la vis 20 est uniformément répartie. De ce fait, le diamètre moyen Φ'₁ de répartition de la charge, défini comme le diamètre d'un cercle de la surface de contact 121 tel que la charge supportée par la surface externe à ce cercle est égale à celle supportée par la surface interne à ce cercle, est confondu avec le diamètre moyen géométrique Φ₁. Ceci conduit dans le cas où la surface de la pièce 30 n'est pas parfaitement plane, à avoir, pour la collerette 12, un comportement analogue à celui d'un disque fixé en son centre et libre aux extrémités, ce qui entraîne une vibration parasite transmise à la rondelle piézo-électrique. Ceci se traduit, comme on peut le voir sur la figure 3 où la courbe de réponse de ce capteur est représentée en trait plein, par la présence d'une fréquence de résonance Fr₁ relativement basse et une plage utile PU₁, dans laquelle le signal du capteur est sensiblement linéaire, réduite.

On a représenté sur la figure 2A une vue en coupe d'un premier mode de réalisation du capteur selon l'invention, détaillant plus particulièrement l'embase 10. Cette embase présente, sur la face inférieure de la collerette 12, un évidement 13 coaxial au manchon 11. Le diamètre de cet évidement est supérieur au diamètre de la paroi extérieure 112 du manchon 11. La profondeur de cet évidement a été limitée à quelques dixièmes de millimètres pour ne pas affaiblir la collerette 12. On a ainsi créé un creux central dans la face inférieure de la collerette 12, au droit du manchon 11. On a également pratiqué un décrochement 14 sur la périphérie de la face inférieure de la collerette. Ces modifications ont pour effet de modifier la surface de contact 121 de l'embase 10 sur la pièce 30. Comme on peut le constater sur la figure 2B, cette surface de contact présente une forme annulaire dont le diamètre intérieur, délimité par le diamètre de l'évidement 13, est supérieur au diamètre extérieur du manchon 11. La profondeur radiale du décrochement 14 a été choisie de telle sorte que les diamètres moyens Φ₁, Φ'₁ et Φ₂ soient sensiblement confondus. Cette disposition présente l'avantage d'éliminer pratiquement les vibrations parasites de la collerette 12 et, comme on peut le voir sur la courbe de réponse représentée en pointillés sur la figure 3, de repousser la fréquence de résonance Fr₂ du capteur vers des fréquences plus élevées. La plage utile PU₂ du capteur selon l'invention en est alors sensiblement augmentée.

On a pu constater expérimentalement que si le diamètre moyen Φ₁ (respectivement Φ'₁) de la surface de contact 121 est supérieur au diamètre moyen Φ₂ de l'épaulement, une amélioration de la courbe de réponse du capteur, de même nature, quoique de moindre intensité, se produisait. De ce fait, la présence du décrochement 14 n'est pas indispensable. Cependant ce décrochement présente certains intérêts, par exemple lors du surmoulage du capteur où il permet de limiter précisément le surmoulage 7.

Dans ce mode de réalisation, comme dans la technique antérieure représentée aux figures 1A et 1B, la face inférieure de la collerette 12 est sensiblement parallèle à la surface de la pièce 30. De ce fait, la pression de contact exercée par la collerette 12 sur la pièce 30, sous la charge développée par le serrage de la vis 20, est sensiblement uniforme, et on ne distingue pas le diamètre moyen géométrique Φ₁ de la surface de contact 121 du diamètre moyen Φ'₁ de répartition de la charge.

Dans un deuxième mode de réalisation représenté à la figure 4, le même résultat peut être obtenu avec un profil de la face inférieure de la collerette différent, par exemple légèrement concave. On peut réaliser une collerette 12 telle que l'angle α formé par la génératrice de la face inférieure avec l'axe du manchon 11 soit légèrement supérieur à 90 degrés. A titre d'exemple, un angle α de 90,5° permet d'obtenir sur un capteur de dimension courante une concavité 13' de quelques centièmes de millimètre. Dans ce cas, avant serrage du capteur, celui-ci repose sur la pièce 30 par l'intermédiaire du bord extérieur de la face inférieure de la collerette 12. Après serrage, la surface de contact 121 peut s'étendre sur toute la face inférieure de la collerette, mais la répartition des pressions de contact, plus élevées à la périphérie qu'au centre permet d'obtenir un diamètre moyen Φ'₁ de répartition de la charge déplacé vers la périphérie et supérieur ou égal au diamètre moyen Φ₂ de l'épaulement même si le diamètre moyen géométrique Φ₁ reste inférieur à Φ₂.

Bien entendu, la concavité de la face inférieure de la collerette n'est pas nécessairement obtenue par une forme tronconique comme dans l'exemple décrit, mais peut être obtenue en définissant un rayon de courbure de cette face. De même, la forme choisie pour obtenir cette concavité ne s'étend pas nécessairement sur toute la face inférieure de la collerette.

Il est important de déterminer la superficie de la surface de contact en fonction des matériaux respectifs de la pièce 30 et de l'embase 10 et de l'effort de serrage appliqué sur la vis 20. En effet, la pression maximale exercée par l'embase sur la pièce 30 ne doit pas dépasser la limite élastique du moins résistant des deux matériaux, sous peine de déformer durablement la surface de contact, ce qui aurait pour conséquence, en cas de déformation de la surface de la pièce 30, de rendre délicat, voire impossible le remplacement d'un capteur. Cette considération doit être également prise en compte dans le cas d'une surface de contact 121 plane, mais de superficie réduite. Pour des capteurs de cliquetis couramment utilisés en électronique automobile, dont le diamètre externe est de l'ordre de vingt millimètres et où les matériaux en regard sont de l'acier, de l'aluminium ou du laiton, une largeur d'anneau de quelques millimètres pour la surface de contact 121 est suffisante.

## Revendications

1. Capteur accélérométrique (1) du type constitué d'une embase (10) présentant la forme d'un manchon (11) prolongé par une collerette (12) dont la face supérieure définit un épaulement (122) sur lequel sont empilées au moins une rondelle piézo-électrique (2), des disques de connexion (3) et une masse sismique (4), et la face inférieure est en contact de pression avec une pièce (30) à mesurer, caractérisé en ce que la face inférieure de la collerette présente un creux central (13,13') tel que la répartition d'une charge mécanique, générée par la pression sur la surface de contact (121) entre la face inférieure de la collerette et la pièce (30) à mesurer, s'effectue également de part et d'autre d'un cercle dont le diamètre moyen (Φ'1) est égal ou supérieur au diamètre moyen (Φ₂) de l'épaulement.

2. Capteur selon la revendication 1, caractérisé en ce que la surface de contact (121) entre la face inférieure de la collerette et la pièce (30) présente une forme annulaire dont le diamètre intérieur est supérieur au diamètre externe du manchon, et le diamètre moyen (Φ₁) est au moins égal au diamètre moyen (Φ₂) de l'épaulement.

3. Capteur selon la revendication 2, caractérisé en ce que la face inférieure de la collerette (12) comporte un évidement (13) coaxial au manchon (11) et de diamètre supérieur au diamètre externe de celui-ci.

4. Capteur selon la revendication 1, caractérisé en ce que la face inférieure de la collerette (12) présente une concavité (13') coaxiale au manchon s'étendant sur au moins une partie de sa surface.

## Patentansprüche

1. Beschleunigungsmessaufnehmer (1) eines Typs, der von einem Grundkörper (10) in Form einer Hülse (11) gebildet wird, welche durch einen Ringflansch (12) verlängert ist, dessen Oberseite eine Schulter (122) bildet, auf der mindestens eine piezoelektrische Scheibe (2), Verbindungsscheiben (3) und eine seismische Masse (4) übereinander gestapelt sind, und dessen Unterseite mit einem zu messenden Bauteil (30) in Druckkontakt steht, dadurch gekennzeichnet, dass die Unterseite des Ringflansches einen zentralen Hohlraum (13, 13') hat, derart, dass die Verteilung einer mechanischen Kraft, die von dem Druck auf die Kontaktfläche (121) zwischen der Unterseite des Ringflansches und dem zu messenden Bauteil (30) erzeugt wird, gleichmäßig beidseitig zu einem Kreis erfolgt, dessen mittlerer Durchmesser (φ'₁) gleich oder größer als der mittlere Durchmesser (φ₂) der Schulter ist.

2. Aufnehmer nach Anspruch 1, dadurch gekennzeichnet, dass die Kontaktfläche (121) zwischen der Unterseite des Ringflansches und dem Bauteil (30) eine Ringform hat, deren Innendurchmesser größer als der Außendurchmesser der Hülse ist und dessen mittlerer Durchmesser (φ₁) mindestens gleich dem mittleren Durchmesser (φ₂) der Schulter ist.

3. Aufnehmer nach Anspruch 2, dadurch gekennzeichnet, dass die Unterseite des Ringflansches (12) eine Ausnehmung (13) hat, die koaxial zu der Hülse (11) ist und einen größeren Durchmesser als der Außendurchmesser derselben hat.

4. Aufnehmer nach Anspruch 1, dadurch gekennzeichnet, dass die Unterseite des Ringflansches (12) eine zu der Hülse koaxiale Konkavität (13') hat, die sich über mindestens einen Teil ihrer Fläche erstreckt.

## Claims

1. Accelerometer sensor (1) of the type comprising a base (10) in the form of a sleeve (11) with a flange (12) at one end whose upper side defines a shoulder (122) on which are stacked at least one piezoelectric element (2), contact disks (3) and a seismic mass (4), and whose underside is in pressure contact with an item under test (30), characterised in that the underside of the flange has a central recess (13,13') such that the distribution of a mechanical load produced by pressure on the contact surface (121) between the underside of the flange and item under test (30) is uniform over a circle whose average diameter (φ'₁) is equal to or greater than the average diameter (φ₂) of the shoulder.

2. Sensor in accordance with Claim 1, characterised in that the contact surface (121) between the underside of the flange and the item under test (30) has an annular shape whose inside diameter is greater than the outside diameter of the sleeve, and the average diameter (φ₁) is at least equal to the average diameter (φ₂) of the shoulder.

3. Sensor in accordance with Claim 2, characterised in that the underside of the flange (12) has a recess (13) coaxial with the sleeve (11) and having a diameter greater than the outside diameter of said sleeve.

4. Sensor in accordance with Claim 1, characterised in that the underside of the flange (12) has a concavity (13') coaxial with the sleeve and extending over at least part of its surface.
